# EUROPEAN PATENT SPECIFICATION

(11) **EP 4 218 504 B1**
(45) Date of publication and mention of the grant of the patent: **09.04.2025**
(21) Application number: 22382083.8
(22) Date of filing: 01.02.2022
(51) Int. Cl.: A47J 27/00, A47J 36/16, A47J 43/046, A47J 43/07

(54) **KITCHEN APPLIANCE FOR PROCESSING FOOD AND METHOD FOR OPERATING THE SAME**
KÜCHENGERÄT ZUR VERARBEITUNG VON NAHRUNGSMITTELN UND VERFAHREN ZU DESSEN BETRIEB
APPAREIL DE CUISINE POUR LE TRAITEMENT D'ALIMENTS ET SON PROCÉDÉ DE FONCTIONNEMENT

(43) Date of publication of application: 02.08.2023
(73) Proprietor: Taurus Research and Development S.L.U., 25790 Oliana (ES)
(72) Inventor: CODINA VILANA, Antoni, 25790 Oliana (ES); ALET VIDAL, Josep, 25790 OLIANA (ES); TRENCH ROCA, Lluís, 08650 Sallent (ES)
(74) Representative: Juncosa Miró, Jaime

(56) References cited:
- EP-A1- 1 731 068
- EP-A1- 2 509 478
- WO-A1-2012/159515
- WO-A1-2019/012208
- WO-A1-2020/191437
- DE-A1- 10 226 941
- DE-U1- 20 206 403
- FR-A1- 2 856 907
- US-B2- 7 871 196

## Description

### Technical field

The present invention relates to the field of household electrical appliances, and, in particular, to the field of kitchen appliances for processing food. The present invention also relates to a method for operating a kitchen appliance for processing food.

### State of the Art

Food processors, also known as kitchen appliances for processing food, known in the prior art commonly perform, or assist a user to perform, one or more different operations, such as mixing, slicing, chopping, etc. Such operations are typically performed, at least in part, by a working tool arranged in a container. Said working tool is usually sharp, thus representing a safety risk for the user, as it could be cut or wounded by such working tool.

Some food processors known in the prior art further comprise heating means of at least part of a container wherein the food is being processed, so that further recipes or food preparations can be done and prepared. The aforementioned safety issues are increased in food processors that can heat the food being prepared, as said heating means represent a burn hazard.

In order to avoid, or at least greatly reduce, the risk for the users of the food processor, food processors typically have safety measures. In order to reduce or avoid safety risks to the users, known food processors typically only operate if the container wherein the food is prepared is closed by a lid or equivalent and if such container is properly attached or fixed to the food processor, provided that such container is removable.

EP 2937027 A1 discloses a food preparation household electrical appliance comprising a housing containing a motor and a removable container that can be arranged on the housing by a simple vertical translation movement, the container comprising a working tool intended to be rotated by said motor and having a base comprising a peripheral skirt engaging on one or more centring projections provided on the housing, wherein said housing comprises at least one support boss formed on an outer wall of one of the centring projections, the boss engaging in an opening formed on the peripheral skirt of the base to fix the container in position on the housing along the vertical direction of engagement.

EP 1731068 A1 discloses a food cooking mixer for the processing and preparation of food, of the type comprising a base structure on which is mounted a support adapted to sustain a container containing food to be processed; motorised driving means adapted to rotate removable stirring or cutting means inside said container; heat energy transferring means adapted to heat said food to be processed inside the container; and weighing means for weighing the container and its contents sustained on said support. The food cooking mixer disclosed in EP 1731068 A1 comprises safety means that prevent operation of the driving means and/or heat energy transferring means if the cover does not close the container in a predetermined manner. However, said safety means do not prevent the container from being opened or removed from its support while the food cooking mixer is in operation. The safety means disclosed in EP 1731068 A1 simply disable or stop the motorised driving means if the lid is opened while the food cooking mixer is in operation, but does not impede someone from removing the container from its support and/or open the cover of the container. Consequently, the safety means of EP 1731068 A1 may not be able to prevent certain hazardous situations for the user or people having access to the food cooking mixer, for example, kids.

EP 2509478 A1 discloses a household cooking appliance comprising a base and a work receptacle removably arranged on said base, the work receptacle being provided with a gripping handle and comprising an electric heating resistor, said electric heating resistor being supplied by a supply circuit comprising an electric connector establishing a disconnectable link between a portion of the supply circuit supported by the base and a portion of the supply circuit supported by the work receptacle, wherein said supply circuit comprises a switch for interrupting the electric supply to the heating resistor and wherein a safety device actuates said switch such as to interrupt the supply to the heating resistor prior to disconnecting the connector when the work receptacle is removed from the base thereof.

WO 2020/191437 A1 discloses a kitchen device including: a base having a mechanism that is operated using electrical power to cause processing of food; a vessel removably mounted on the base and including a bottom wall, a side wall extending upwardly from the bottom wall to a rim so as to provide a space to receive the food to be processed, with the rim surrounding an opening to the space; a lid removably coupled to the rim so as to at least partially close the opening; and an interlock system operatively associated with the mechanism to permit the delivery of the electric power to the mechanism, the system including a first interlock circuit and a second interlock circuit, wherein delivery of the electric power to the mechanism is permitted by the completion of the first interlock circuit and activation of the second interlock circuit, wherein the first interlock circuit includes a first coupling to complete the first circuit, the first coupling including a first portion mounted to the lid and a second portion mounted to the vessel adjacent the rim so that the first portion is located adjacent the second portion when the lid is coupled to the rim thereby completing the first circuit, and wherein the second interlock circuit includes a second coupling to activate the second interlock circuit, the second coupling including a first portion that is part of the second interlock circuit and mounted to the base, the first portion being operatively associated with a second portion that is mounted to the vessel and part of the first interlock circuit, wherein completion of the first interlock circuit causes operation of the second portion of the second coupling, thereby causing operation of the first portion of the second coupling to thus activate the second interlock circuit and permit delivery of the electric power to the mechanism.

### Brief description of the invention

The present invention is directed towards a kitchen appliance with enhanced safety or protective measures that prevents the operation of the kitchen appliance if a container and its lid are not correctly placed, and prevents said container from being removed from the kitchen appliance and the container from being opened while the kitchen appliance is in operation. In order to do so, according to a first aspect of the present invention, it is disclosed a kitchen appliance for processing food comprising: a housing having a support adapted to sustain a container for containing food to be processed; motorised driving unit adapted to rotate removable stirring or cutting tools inside said container; a heating unit adapted to heat food to be processed inside the container; a lid for closing the container; and one or more displaceable elements that cooperate with a portion or an appendage of said lid to prevent operation of the driving unit and/or heating unit by releasing an element triggering them, if the lid is not fitted to close the container in a predetermined manner; at least one sensor to detect the placement of the container on the support of the housing in a predetermined manner, said sensor being operatively connected to a control unit that prevents operation of the driving unit and/or heating unit if the container is not placed on the support of the housing in a predetermined manner; wherein the kitchen appliance further comprises a container locking unit including at least one motorised movable tab having a retaining position, in which it mechanically interferes with an opening of a skirt of the container, and a release position, in which it does not interfere with said skirt of the container, wherein the at least one motorised movable tab moves to its retaining position upon activation by said control unit when the container is placed on the support in a predetermined manner and the lid closes the container in a predetermined manner; and wherein said at least one movable tab in its retaining position mechanically prevents the opening of the lid of the container by interfering with at least one of said displaceable elements.

According to the first aspect of the present invention, the peripheral skirt of the removable container may have a circular shape and may engage a centring projection of the support; and the container locking unit may comprise two motorised movable tabs arranged diametrically opposed with respect to the circular skirt that comprises two corresponding diametrically opposed openings, each movable tab mechanically interfering with the corresponding opening in their retaining position.

According to an example of the present invention, the peripheral skirt of the removable container may have a polygonal shape matching the shape of a centring projection of the support; and the container locking mechanism may comprise two motorised movable tabs, each movable tab mechanically interfering with a corresponding opening on different faces of the polygonal skirt in their retaining position.

According to the first aspect of the present invention, the container may house said one or more displaceable elements; at least one of said one or more displaceable elements may have at least one magnetic portion; and the housing may further comprise at least one Hall effect sensor arranged to detect said at least one magnetic portion when the lid closes the container in a predetermined manner.

According to the first aspect of the present invention, the container may comprise a handle attached to an outer wall thereof, said handle housing at least part of said one or more displaceable elements; said one or more displaceable elements may comprise at least one rod in a guiding configuration and having at least one magnetic portion, said rod being installed so that it is moved downwards against the force of a spring by said portion or appendage of the lid to a position in which the at least one magnetic portion of the rod is sufficiently close to said Hall effect sensor to be detected, said appendage being in the form of a pusher tab.

According to the first aspect of the present invention, said one or more displaceable elements may further comprise: a trigger that may project through an aperture formed in the handle of the container, said trigger may have a latch adapted to interfere with an aperture of the pusher tab of the lid, said trigger being movable between a retention position, in which said latch may interfere with the aperture of the pusher tab to retain the lid in a closed position, and a released position, in which the latch may be separated from the pusher tab; said trigger may be adapted to be pushed to move the movable element from the retention position to the released position; and at least one spring for pushing said trigger towards its retention position.

According to the first aspect of the present invention, said one or more displaceable elements may further comprise a locking element arranged slidably along the at least one rod, said locking element being movable between a locked position wherein it may interfere with the trigger preventing said trigger to move to its released position, and an unlocked position wherein it may allow the trigger to move to its released position; and wherein the at least one motorised movable tab in its retaining position may act as a stop preventing the locking element from moving to its unlocked position.

According to the first aspect of the present invention, the at least one motorised movable tab may be driven by a corresponding motor and may pivotally move from the release position to the retaining position, and vice versa.

According to an example of the present invention, the at least one motorised movable tab may be driven by a corresponding motor and may slidably move from the release position to the retaining position, and vice versa.

According to the first aspect of the present invention, the container may comprise at least one ferromagnetic portion; and said heating unit may comprise an induction heating device mounted on said housing, said induction heating device may be separated from the support and arranged at a predetermined distance from said ferromagnetic portion of the container.

According to the first aspect of the present invention, the kitchen appliance may further comprise a weighing unit for weighing the container and its content.

According to the first aspect of the present invention, the control unit may comprise at least one microprocessor adapted to execute different cooking programs and/or digital recipe programs stored in an internal or removable memory.

According to the first aspect of the present invention, the control unit may be operatively connected to a touch sensitive display. Said touch sensitive display may function as an input unit for selecting the operation, recipe, etc. that the kitchen appliance has to perform. Said touch sensitive display may provide information to the user regarding the status of the kitchen appliance. Said status may comprise the operation being performed, the next operation to be performed, selected recipe, next step of the recipe, etc.

According to a second aspect of the present invention, it is disclosed a method for operating a kitchen appliance according to the first aspect of the present invention comprising the steps of: placing in a predetermined manner a container in a support adapted to sustain said container, said support being located in a housing of the kitchen appliance; closing a lid of the container in a predetermined manner; sensing the placement of the container in a predetermined manner on the support of the housing with a sensor operatively connected to a control unit; driving at least one motorised movable tab from a release position to a retaining position, wherein it mechanically interferes with an opening of a skirt of the container immobilising it and wherein it further interferes with at least one displaceable element that cooperates with a portion of an appendage of the lid to prevent operation of a driving unit and/or heating unit it the lid is not fitted to close the container in a predetermined manner; operating the driving and/or heating unit.

According to the second aspect of the present invention, the method may further comprise the steps of: stopping the driving and/or heating unit; driving the at least one motorised movable tab from the retaining position to the release position; opening the lid of the container allowing access to the inside; and optionally removing the container from the support.

According to the second aspect of the present invention, the step of opening the lid of the container may comprise pushing a trigger that projects through an aperture formed in the handle of the container.

According to the second aspect of the present invention, the step of driving the at least one motorised movable tab from the retaining position to the release position may be carried out after a certain amount of time has elapsed after stopping the driving and/or heating unit. This provides an enhanced safety feature as it prevents the user to have access to the inside of the container when doing so may be dangerous, for example, because the content is still too hot.

It will be understood that references to geometric position, such as parallel, perpendicular, tangent, etc. allow deviations up to ± 5° from the theoretical position defined by this nomenclature.

It will also be understood that any range of values given may not be optimal in extreme values and may require adaptations of the invention to these extreme values are applicable, such adaptations being within reach of a skilled person.

Other features of the invention appear from the following detailed description of an embodiment.

### Brief description of the Figures

The foregoing and other advantages and features will be more fully understood from the following detailed description of an embodiment with reference to the accompanying drawings, to be taken in an illustrative and non-limitative manner, in which:
FIG. 1 shows a perspective view of an exemplary embodiment of a kitchen appliance for processing food according to the present invention.
FIG. 2 shows a perspective view of the support adapted to sustain a container of the exemplary embodiment of a kitchen appliance for processing food shown in FIG. 1.
FIG. 3 shows a top perspective view of the container with its handle partly sectioned of the exemplary embodiment of a kitchen appliance for processing food shown in FIGS. 1 and 2.
FIG. 4 shows a detail view of the container and its partly sectioned handle shown in FIG.3.
FIG. 5 shows a bottom perspective view of part of the container shown in FIGS. 3 and 4.

### Detailed description of an embodiment

The foregoing and other advantages and features will be more fully understood from the following detailed description of an embodiment with reference to the accompanying drawings, to be taken in an illustrative and not limitative way.

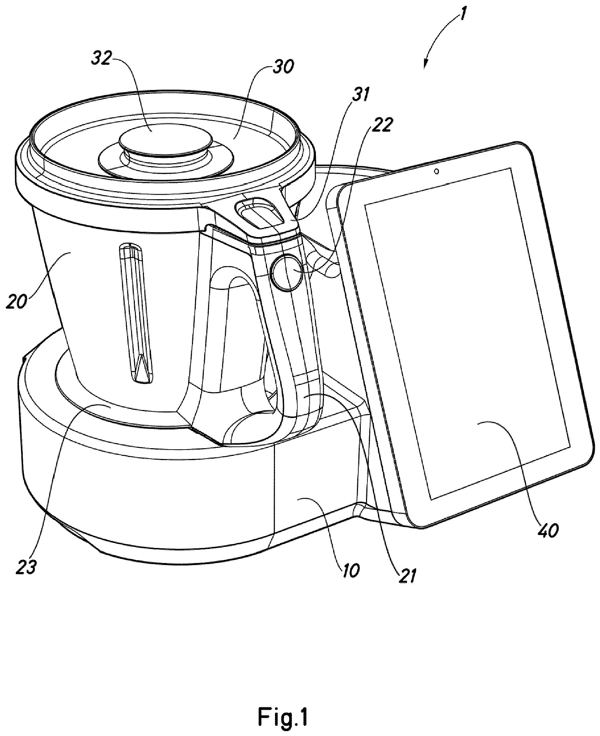

FIG. 1 shows a perspective view of an exemplary embodiment of a kitchen appliance 1 for processing food according to the present invention. Said kitchen appliance 1 for processing food comprises a housing 10, which comprises a motorised driving unit adapted to rotate removable stirring or cutting tools inside a container 20 for being arranged on the housing 10, and in particular, for being arranged on a support 11 of the housing 10 in a removable condition.

In this exemplary embodiment, the container 20 is placed on the housing 10, and can be removed from it, following a linear path, that in this case, is perpendicular to a base of the kitchen appliance 1. It is understood that the bottom surface or base of the housing 10 is intended to be parallel to the surface on which it is placed, said linear path of the container 20 is also perpendicular to said surface on which the appliance 1 is placed. This differs from other kitchen appliances for processing food known in the art wherein the container is placed on the housing following a rotary path, due to the use of a bayonet connection, or similar, between the container and the housing. The placement, and removal, of the container 20 on the housing 10 following a linear path eases said connection between the container 20 and the housing 10, as a linear path is simple and effective. Moreover, placing a container 20 on the housing 10 following a linear path can usually be done using a single hand, whereas placing a container following a rotary path usually requires the use of both hands.

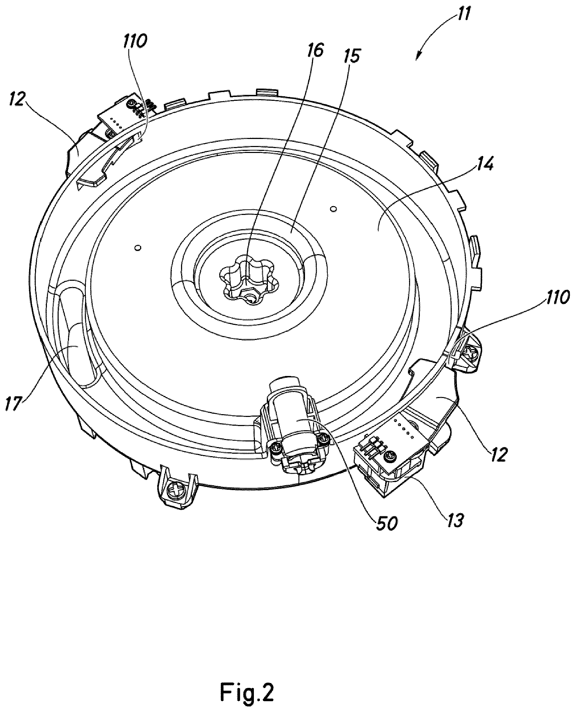

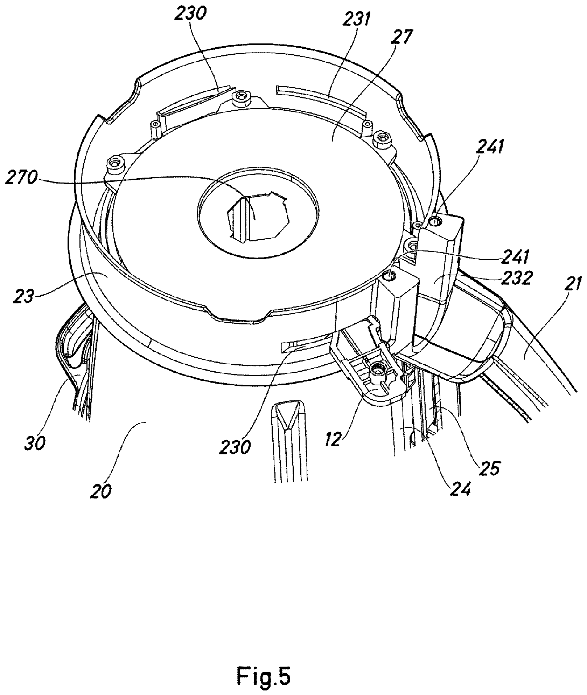

The container 20 comprises a skirt 23, which can be seen in greater in FIG. 5, that increases the stability of the container 20 when placed on the housing as it increases the contact surface and the interference between the housing 10 and the container 20, and in particular, increases the contact surface between a centring projection 14 (see FIG. 2) of the support 11 and said skirt 23. Moreover, as will be explained hereinafter, in the exemplary embodiment shown the container 20 is fixed to the housing 10 by interference of at least one motorised movable tab 12 with an opening 230 of the skirt 23.

Holding or fixing the container 20 by the skirt 23 on its base provides a more compact arrangement of the kitchen appliance 1 compared to other known food processing devices wherein the container is hold by its lid, that is to say, the container is hold by its uppermost part. In these known devices, the kitchen appliance is bulkier than in the present invention wherein the locking unit is placed on the lowermost part of the housing 10.

The container 20 is closed by a removable lid 30, which besides preventing the food from being spilled, etc. outside the container 20 while the food is being processed, also provides an important safety feature as it avoids that someone places a limb, e.g., a hand, inside the container 20 while the appliance 1 is in operation. Placing a limb inside the container 20 while the kitchen appliance 1 is in operation would represent a serious risk of cut, amputation, burn, etc. Therefore, it is an aim of the present invention to ensure that the kitchen appliance 1 for processing food keeps the lid closed while it is in operation.

The lid 30 of the exemplary embodiment shown comprises a small opening (for example, an opening with a diameter equal or smaller than 10 cm, preferably with a diameter equal or smaller than 8 cm, even more preferably equal or smaller than 5 cm), closed by a removable cap 32. Said small opening allows for the introduction of ingredients, for example, salt, oil, milk, etc. while food is being processed without requiring the opening of the lid 30, which would also require the kitchen appliance 1 to stop the heating unit and/or the motorised driving unit. However, said small opening is small enough to prevent the introduction of a limb inside the container 20. The removable cap 32 can be transparent or translucent to allow inspection of the interior of the container 20 while the food is being processed. However, it could also be made of an opaque material. Said small opening is optional and may not be present in other embodiments. It is also possible that the kitchen appliance forms part of a kit comprising two lids 30, a first one having said small opening closes by said removable cap and a second one without any opening.

The container of the exemplary embodiment shown further comprises a handle 21 for handling the container 20. The handle 20 is specially envisaged for placing the container 20 on the housing 1 of the appliance 1 and for remove it from there, increasing the ergonomics of said procedures. In the exemplary embodiment shown, the container 20 comprises a single handle 21 arranged following a longitudinal direction of the container 20. However, other embodiments of the present invention can comprise more than one handle 21, which may also be arranged perpendicular to the longitudinal axis of the container 20. In other embodiments, the handle 21 can also be in the form of a flange around the periphery of the opening or mouth of the container 20. In the latter case, the handle 21 could be in the form of a single flange around the entire periphery of the mouth of the container, or comprise one or more handles 21, preferably two, arranged radially around the mouth of the container.

As will be explained hereinafter in more detail, in the exemplary embodiment shown, the handle 20 houses displaceable elements that cooperate with an appendage 31, or a portion thereof, of the lid 30 to prevent operation of the driving unit and/or of a heating unit if the container 20 is not placed on the support 11 in a predetermined manner and if the lid 30 is not properly closing said container 20.

The food preparation household electrical appliance 1 of the exemplary embodiment shown further comprises a touch sensitive display or screen 40 acting as an input unit of the control unit of the kitchen appliance 1 so that the user can, for example, enter, or choose from a predetermined list, the commands, operations, temperatures, recipes, etc. that the kitchen appliance 1 has to perform. Besides being configured for providing inputs to the control unit of the kitchen appliance 1, the touch screen 40 can also be configured to provide feedback to the user. Said feedback may be, for example, which is the next step of a recipe, elapsed time of a recipe, status of the kitchen appliance 1, errors detected, ingredients needed, etc. Other embodiments of the present invention can substitute the touch screen 40 by a button and dial input unit, in which case the kitchen appliance 1 can still comprise a screen for presenting information to the user. It is also possible that a household electrical appliance 1 according to the present invention lacks any touch screen 40, display, button like input unit, etc., in which case the appliance 1 can be controlled by a separate device associated with the appliance 1, as for example, an app or computer program installed on a smartphone, tablet, computer, etc. which is operatively connected to the appliance 1, wirelessly or by wire.

In the present exemplary embodiment, the kitchen appliance 1 further comprises a weighing unit for weighing the container 20 and its container. This is particularly useful in recipes or operations wherein the amount and proportion of the ingredients is crucial. An integrated weighing unit makes unnecessary to have a separate weighing scale.

The kitchen appliance 1 of the exemplary embodiment shown further comprises a weighing unit for weighing the container 20 and its content. Said weighing unit can comprise at least one weight transducer mounted on the housing 10. Certain embodiments of the present invention can comprise only one weight transducer, whereas other embodiments can comprise two or three of them, and even more. In the case of multiple weight transducers, the control unit of the kitchen appliance 1 can perform a calculation based on the combined readings of the weight transducer with subtraction of the tare, including the weight of the container 20. The exemplary embodiment shown in FIG. 1 comprises four weight transducers. The net weight value of the content, e.g., food, of the container 20 may be shown on the display 40.

The weighing unit allows various weighing operations during food processing, once it is completed or before starting, but the reading of the weight transducer 34 is always taken with the motorised driving unit stopped, i.e., when there are neither masses in movement nor vibration that could cause errors in said weighing operations.

The presence of a weighing unit can be very advantageous, especially when preparing recipes in which the amounts and/or proportions of ingredients are particularly important.

The exemplary embodiment shown of a kitchen appliance 1 according to the present invention further comprises a heating unit for heating the food to be processed inside the container 20. In particular, the container 20 comprises at least one ferromagnetic portion and said heating unit comprise at least one induction heater device installed on the housing 10 of the kitchen appliance 1, said induction heater device being arranged at a predetermined distance from said ferromagnetic portion of the container and separated from its support 11.

Unlike with electric resistance heater elements employed in food cooking mixers known in the art, the electromagnetic induction heater devices do not have to be in contact with the body to be heated in order to produce efficient heating of the same, but instead they can be located at a predetermined distance from the body to be heated and even a body "transparent" to the electromagnetic waves may be interposed between the induction coil and the body to be heated, which has to be at least partly ferromagnetic, without the heating efficiency being affected. Moreover, an induction heater device provides a faster and more efficient heating than electric resistance heating elements, and greater energy performance leading to a better energy efficiency.

The mentioned predetermined distance at which the induction heater device is able to operate can be, for example, between 0.5 and 6 cm with respect to the outer surface of the container 20, which allows, for example, to have the induction heater device in the form of a coil wrapped around a lower portion of the container 20, with a wall of the support 11 being interposed between the coil and the container 20 without any contact between the support 11 and the heater device. The mentioned wrapping induction coil arrangement has several advantages. Firstly, for a jug-shaped container 20, like the one of the exemplary embodiment shown, the surface of the container 20 that can be heated with said wrapping coil arrangement is greater compared to a flat coil arrangement underneath the base 27 of the container (see FIG. 5). In addition, the wrapping coil arrangement can be installed further away from the movable members of the motorised driving unit associated with the removable stirring or cutting means inside said container 20 compared to a flat coil arrangement underneath the container base 27. Thanks to this, some of said members, such as shafts and bearings, can be advantageously made of a ferromagnetic material without any risk of them being heated by the induction heater device.

Another advantage of induction heating is that the heater device itself is not heated, only the ferromagnetic material of the container is heated. This produces less accumulation of heat inside the housing 10 of the kitchen appliance 1, which reduces the need for a forced ventilation to remove the heat from inside the housing and reduces the risk of burns to the user, and moreover it also reduces the risk of weighing errors due to thermal expansion of the weight transducers, as well as increases the life expectancy of the internal components as it is known that extreme temperatures can damage or reduce the life expectancy of some of them, especially the electronic ones.

A jug-shaped container 20, like the one of this exemplary embodiment, is more suitable for housing stirring or cutting tools inside than, for example, a lower, wider container, such as a pan or similar.

In the heating unit of the exemplary embodiment shown the heater device is separate, not only from the container 20, but also from the container support 11. Among other benefits, this enables the container 20 to be supported on a weight transducer attached to the base structure in order to weigh the support with the container and its contents without including the weight of the heater device in the weighing. This layout provides better precision in the weight value of the food inside the container because the tare included in the weighing is less.

FIG. 2 shows a perspective view of the support 11 adapted to sustain the container 20 of the exemplary embodiment of a kitchen appliance 1 for processing food shown in FIG. 1. The support 11 of this exemplary embodiment is of a substantially cylindrical shape, although in other embodiments said support may be polygonal. If the support 11, or at least its centring projection 14, is polygonal, the skirt 23 of the container 20 is also polygonal, typically matching the shape of the projection 14.

The centring projection 14 comprises a coupling element 16 for the reception of a projection of matching shape of the removable stirring or cutting tools (not shown) placed inside the container 20. Said coupling element 16 is operatively connected to a motorised driving unit that drives said removable stirring or cutting tools. The connection between the coupling element 16 and a motor of the motorised driving unit may be direct or via a transmission. In the exemplary embodiment shown, the support 11 comprises a ridge 15 that prevents any liquid from leaking to the coupling element 16 or any element underneath it. Moreover, in the present exemplary embodiment, in order to drain any liquid that might accidentally be spilled on the support 11, the upper surface of the centring projection may be sloped and the base of the support 11 may comprise a drain 17 to drain any liquid that might be present on the support, due to, for example, spillage or condensation. Drained liquid may be directed to a reservoir or to the surface on which the kitchen appliance 1 rests.

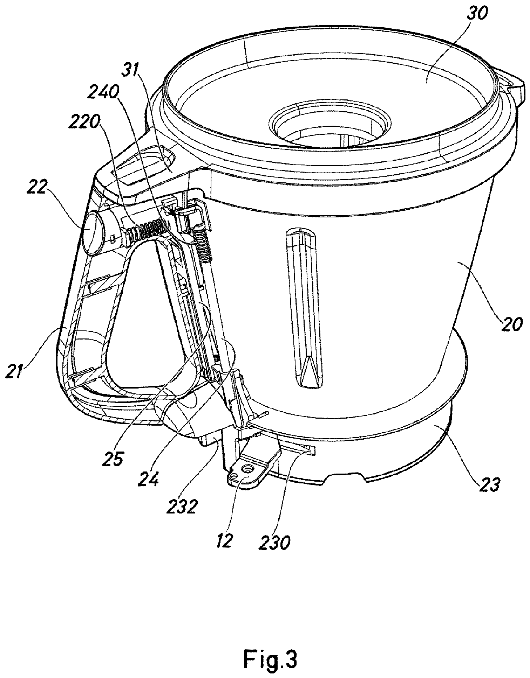

The exemplary embodiment shown further comprises a temperature sensor 50, which in the present case is a thermocouple, to measure the temperature of the container 20. Said temperature sensor 50 is operatively connected to the control unit of the kitchen appliance 1. In this exemplary embodiment, the temperature sensor 50 is arranged and shaped so that it also orientates the container 20 as it can only be placed on the centring projection 14 in an angular position wherein the temperature sensor 50 matches an opening 232 of the skirt 23 of the container 20 (see FIGS. 3 and 5).

The exemplary embodiment shown comprises two independent motorised movable tabs 12 arranged diametrically opposed with respect to the support 11 and the skirt 23 of the container 20. Each motorised movable tab 12 has a retaining position, wherein it mechanically interferes with a corresponding opening 230 of the skirt 23 of the container 20 (see FIGS. 3 and 5), and a release position, wherein it does not interfere with said skirt 23 of the container 20 so that the container can be removed from the support 11 of the housing 10 of the kitchen appliance 1. In order to move from the release position to the retaining position, and vice versa, each independent movable tab 12 pivotally moves through an aperture 110 in the support 11 of the housing. In other embodiments, the movable tabs 12, for example, can move from the release position to retaining position, and vice versa, for example, following a linear path.

Each movable tab 12 is driven by a corresponding motor 13 operatively connected to the control unit of the kitchen appliance 1. The motors 13 may be actuated individually or simultaneously.

Although two motorised movable tabs 12 are preferred as they provide a good balance between complexity and attachment of the container 20 to the support 11, in other embodiments only one motorised movable 12 can suffice. It is also possible to have more than two independent motorised movable tabs 12, for example, one for each face in case of a polygonal skirt.

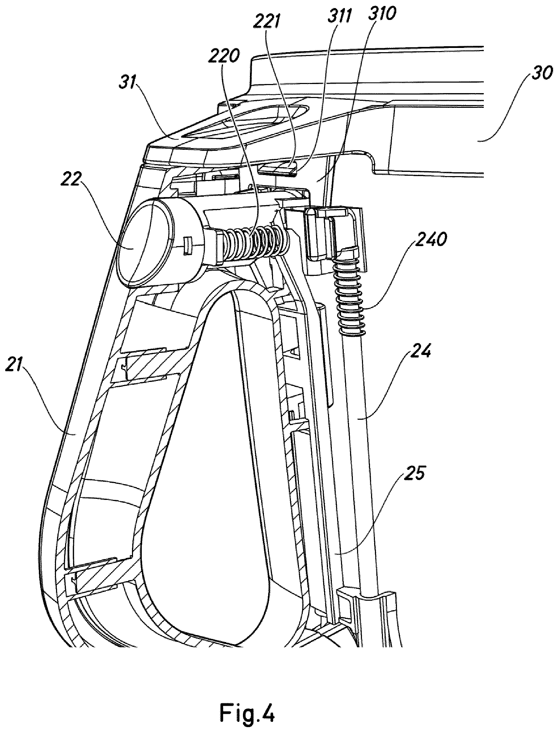

FIG. 3 shows a top perspective view of the container 20, with its handle 21 partly sectioned, of the exemplary embodiment of a kitchen appliance 1 for processing food shown in FIGS. 1 and 2. FIG. 4 shows a detail view of the container 20 and its partly sectioned handle 21 shown in FIG. 3. In these figures the container 20 is depicted with its lid 30 closing its mouth so that its appendage 31 cooperates with the displaceable elements housed inside the handle 21.

In this exemplary embodiment, said displaceable elements comprise two rods 24 (only one can be seen as the other rod 24 is hidden in the non-sectioned part of the handle 21) arranged in a guiding configuration, so that each rod 24 can move linearly.

When the lid 30 is closed in a predetermined manner, as shown in FIGS. 3 and 4, each rod 24 is moved downwardly by an appendage 31 of the lid 30, and in particular, by a pusher tab 310 formed in said appendage 31. Each rod has a magnetic portion 241 (see FIG. 5) in its lowermost part and the housing 10 comprises at least one Hall effect sensor, which in the exemplary embodiment shown is arranged on the base of the support 11, so that when the lid 30 is closing the container 20 in a predetermined manner and the container is placed on the support 11 in a predetermined manner, said magnetic portion 241 is detected by said Hall effect sensor operatively connected to the control unit of the kitchen appliance 1, so that the control unit is aware that the container is in place and properly closed and, thus, the driving and/or heating units of the kitchen appliance 1 are ready to be activated after the movable tabs 12 are placed in their retaining position.

When the lid 30 is opened, a spring 240 pushes the rod 24 upwardly, so that the Hall effect sensor can no longer detect the magnetic portion 241 of the rod, thus preventing the activation of the driving and/or the heating unit of the kitchen appliance 1. It the lid 30 is not opened, but the container 20 is removed from its support 11, the situation is similar, as the Hall effect sensor cannot detect the magnetic portion 241 of the rod and, thus, activation of the driving and/or heating unit is prevented.

In other embodiments the Hall effect sensor and the magnetic portion 241 of the rods 24 can be replaced, for example, by an optical sensor or by a limit sensor.

In order to open and close the lid 30 of the container 20, the movable elements of the exemplary embodiment shown further comprises a trigger 22 that projects through an aperture formed in the handle 21 of the container 20. The end projecting through said aperture in the handle 21 acts as a pushbutton. Said trigger 22 comprises, at the end opposite the one acting as a pushbutton, a latch 221 adapted to interfere with an aperture 311 of the pusher tab 310 formed in the appendage 31 of the lid 30.

Said trigger 22 is movable between a retention position, in which its latch 221 interferes with the aperture 311 of the pusher tab 310 to retain the lid 30 in a closed position, and a released position, in which the latch is separated from the pusher tab 310 so that the lid 30 can be opened. The movable elements further comprise two springs 220 (one is hidden in FIGS. 3 and 4) for returning the trigger 22 to the retention position once the user stops pressing the end acting as a pushbutton.

The movable elements of the exemplary embodiment shown further comprise a locking element 25 arranged slidably along the rods 24, said locking element 25 being movable between a locked position, in which it interferes with the trigger 22 preventing said trigger 22 to move to its released position, and an unlocked position, in which it allows the trigger 22 to move to its released position. In the present case, the locked position corresponds to its uppermost position and the unlocked position corresponds to its lowermost position.

When the at least one motorised movable tab 12 is in its retaining position (see FIG. 3), besides interfering with the opening 230 of the skirt 23 so that the container 20 is attached to the housing 10 of the kitchen appliance 1, said movable tab 12 also interferes with the movement of the locking element 25, preventing said locking element 25 from moving to its unlocked position and keeping it in the locked position, so that the trigger 22 cannot be moved to its released position, and, thus, preventing the opening of the lid 30.

Once the motorised movable tab 12 moves to its release position, the locking element 25 is able to be pushed downwards by the trigger 22 to its unlocked position, allowing said trigger to move to its released position, thus allowing the opening of the lid 30.

In the exemplary embodiment shown, the control unit of the kitchen appliance 1 may be configured to move the motorised movable tab 12 to its unlocked position only after a certain amount of time has elapsed after the end of the food preparation or recipe. This may depend on the kind of preparation or recipe performed and can be especially useful, for example, when a preparation involving high temperatures has been performed, in which case the control unit may delay the opening of the container (as stated above, if the movable tab 12 is in its retaining position the lid 30 of the container 20 cannot be opened) until the temperature of the content of the container has reached a safe value. In order to do so, the control unit can comprise a timer as such or said timer may be implemented as a computer program or software.

Other embodiments of the present invention can lack such timer or delayed opening of the container 20.

FIG. 5 shows a bottom perspective view of part of the container 20 shown in FIGS. 3 and 4. This bottom perspective view shows elements that in FIGS. 3 and 4 are hidden due to the perspective used.

The container base 27 comprises an orifice 270 at the centre thereof for the passage of the removable stirring or cutting tools (not shown) and, in particular, for the passage of a shaft that connects the stirring or cutting blades with the coupling element 16 previously described.

The skirt 23 of this exemplary embodiment, besides the openings 230 for the passage of motorised movable tabs 12, also comprises an opening 231 for enhancing air flow in the cavity defined by the skirt 23 and the centring element 14. In this figure, the movable tab 12 shown is depicted in its retaining position wherein it acts as a stop of the locking element 25 preventing the opening of the lid 30 of the container 20.

The perspective used in this figure clearly shows the opening 232 that matches the shape of the temperature sensor 50 (see FIG. 2) ensuring that the container 20 is placed on its support 11 in the correct angular position, thus ensuring that the Hall effect sensor will be able to detect the magnetic portions 241 of the rods 24 and that the motorised movable tabs 12 will be able to be inserted into the corresponding openings 230 of the skirt 23. As can be seen, in this exemplary embodiment, said opening 232 of the skirt 23 is aligned with the handle 21 of the container 20.

## Claims

1. Kitchen appliance for processing food comprising:
a container (20) for containing food to be processed;
a housing (10) having a support (11) adapted to sustain the container (20);
a motorised driving unit adapted to rotate removable stirring or cutting means tools inside said container (20);
a heating unit adapted to heat food to be processed inside the container (20);
a lid (30) for closing the container (20);
one or more displaceable elements that cooperate with a portion or an appendage (31) of said lid (30) to prevent operation of the driving unit and/or heating unit by releasing an element triggering them, if the lid (30) is not fitted to close the container (20) in a predetermined manner;
at least one sensor to detect the placement of the container on the support (11) of the housing (10) in a predetermined manner, said sensor being operatively connected to a control unit that prevents operation of the driving unit and/or heating unit if the container (20) is not placed on the support (11) of the housing (10) in a predetermined manner;
**characterised in that** it further comprises a container locking unit including at least one motorised movable tab (12) having a retaining position, wherein it mechanically interferes with an opening (230) of a skirt (23) of the container (20), and a release position, wherein it does not interfere with said skirt (23) of the container, wherein the at least one motorised movable tab (12) moves to its retaining position upon activation by said control unit when the container (20) is placed on the support (11) in a predetermined manner and the lid (30) closes the container (20) in a predetermined manner;
and **in that** said at least one movable tab (12) in its retaining position mechanically prevents the opening of the lid (30) of the container (20) by interfering with at least one of said displaceable elements.

2. Kitchen appliance, according to claim 1, **characterised in that** the peripheral skirt (23) of the removable container (20) has a circular shape and engages a centring projection (14) of the support (11); and **in that** the container locking unit comprises two motorised movable tabs (12) arranged diametrically opposed with respect to the circular skirt (23) that comprises two corresponding diametrically opposed openings (230), each movable tab (12) mechanically interfering with the corresponding opening (230) in their retaining position.

3. Kitchen appliance, according to claim 1 or 2, **characterised in that** the container (20) houses said one or more displaceable elements; at least one of said one or more displaceable elements having at least one magnetic portion (241);
and **in that** the housing further comprises at least one Hall effect sensor arranged to detect said at least one magnetic portion (241) when the lid (30) closes the container (20) in a predetermined manner.

4. Kitchen appliance, according to claim 3, **characterised in that** the container (20) comprises a handle (21) attached to an outer wall thereof, said handle (21) housing at least part of said one or more displaceable elements;
said one or more displaceable elements comprising at least one rod (24) in a guiding configuration and having at least one magnetic portion (241), said rod (24) being installed so that it is moved downwards against the force of a spring (240) by said portion or appendage (31) of the lid (30) to a position in which the at least one magnetic portion (241) of the rod (24) is sufficiently close to said Hall effect sensor to be detected, said appendage (31) being in the form of a pusher tab (310).

5. Kitchen appliance, according to claim 4, **characterised in that** said one or more displaceable elements further comprise:
a trigger (22) that projects through an aperture formed in the handle (21) of the container (20), said trigger (22) having a latch (221) adapted to interfere with an aperture (311) of the pusher tab (310) of the lid, said trigger (22) being movable between a retention position, in which said latch (221) interferes with the aperture (311) of the pusher tab (310) to retain the lid (30) in a closed position, and a released position, in which the latch (221) is separated from the pusher tab (310); said trigger (22) being adapted to be pushed to move the movable element (12) from the retention position to the released position; and
at least one spring (220) to push said trigger towards its retention position.

6. Kitchen appliance, according to claim 4 or 5, **characterised in that** said one or more displaceable elements further comprise a locking element (25) arranged slidably along the at least one rod (24), said locking element (25) being movable between a locked position wherein it interferes with the trigger (22) preventing said trigger (22) to move to its released position, and an unlocked position wherein it allows the trigger (22) to move to its released position;
and **in that** the at least one motorised movable tab (12) in its retaining position acts as a stop preventing the locking element (25) from moving to its unlocked position.

7. Kitchen appliance, according to any one of the preceding claims, **characterised in that** the at least one motorised movable tab (12) is driven by a corresponding motor and pivotally moves from the release position to the retaining position, and vice versa.

8. Kitchen appliance, according to any one of the preceding claims, **characterised in that** the container (20) comprises at least one ferromagnetic portion;
and **in that** said heating unit comprises an induction heating device mounted on said housing (10), said induction heating device being separated from the support (11) and arranged at a predetermined distance from said ferromagnetic portion of the container (20).

9. Kitchen appliance, according to any one of the preceding claims, **characterised in that** it further comprises a weighing unit for weighing the container (20) and its content.

10. Kitchen appliance, according to any one of the preceding claims, **characterised in that** the control unit comprises at least one microprocessor adapted to execute different cooking programs and/or digital recipe programs stored in an internal or removable memory.

11. Kitchen appliance, according to claim 10, **characterised in that** the control unit is operatively connected to a touch sensitive display (40).

12. Method for operating a kitchen appliance according to any one of claims 1 to 11 comprising the steps of:
- placing in a predetermined manner a container (20) in a support (11) adapted to sustain said container (20), said support (11) being located in a housing (10) of the kitchen appliance (1);
- closing a lid (30) of the container (20) in a predetermined manner;
- sensing the placement of the container (20) in a predetermined manner on the support (11) of the housing (10) with a sensor operatively connected to a control unit;
- driving at least one motorised movable tab (12) from a release position to a retaining position, wherein it mechanically interferes with an opening (230) of a skirt (23) of the container (23) immobilising it and further interferes with at least one displaceable element that cooperates with a portion of an appendage (31) of the lid (30) to prevent operation of a driving unit and/or heating unit it the lid (30) is not fitted to close the container (20) in a predetermined manner; and
- operating the driving and/or heating unit.

13. Method, according to claim 12, **characterised in that** it further comprises the steps of:
- stopping the driving and/or heating unit;
- driving the at least one motorised movable tab (12) from the retaining position to the release position;
- opening the lid (30) of the container (20) allowing access to the inside; and
- optionally removing the container (20) from the support (11).

14. Method, according to claim 13, wherein the step of opening the lid (30) of the container (20) comprises pushing a trigger (22) that projects through an aperture formed in the handle (21) of the container (20).

15. Method, according to claim 13 or 14, wherein the step of driving the at least one motorised movable tab (12) from the retaining position to the release position is carried out after a certain amount of time has elapsed after stopping the driving and/or heating unit.

## Patentansprüche

1. Küchengerät zum Verarbeiten von Nahrungsmitteln, umfassend:
einen Behälter (20) zur Aufnahme von zu verarbeitenden Nahrungsmitteln;
ein Gehäuse (10), das eine Halterung (11) aufweist, die dazu angepasst ist, den Behälter (20) zu stützen;
eine motorisierte Antriebseinheit, die dazu angepasst ist, entfernbare Rühr- oder Schneidemittelwerkzeuge innerhalb des Behälters (20) zu rotieren;
eine Erwärmungseinheit, die dazu angepasst ist, zu verarbeitende Nahrungsmittel innerhalb des Behälters (20) zu erwärmen;
einen Deckel (30) zum Verschließen des Behälters (20);
ein oder mehrere verschiebbare Elemente, die mit einem Abschnitt oder einem Ansatz (31) des Deckels (30) zusammenwirken, um den Betrieb der Antriebseinheit und/oder der Erwärmungseinheit durch Lösen eines Elements, das sie auslöst, zu verhindern, falls der Deckel (30) nicht so angebracht ist, dass er den Behälter (20) auf eine vorbestimmte Weise verschließt;
mindestens einen Sensor zur Erkennung der Platzierung des Behälters auf der Halterung (11) des Gehäuses (10) in einer vorbestimmten Weise, wobei der Sensor betriebsmäßig mit einer Steuereinheit verbunden ist, die den Betrieb der Antriebseinheit und/oder der Erwärmungseinheit verhindert, falls der Behälter (20) nicht auf der Halterung (11) des Gehäuses (10) auf eine vorbestimmte Weise platziert ist;
**dadurch gekennzeichnet, dass** es ferner eine Behälterverriegelungseinheit umfasst, die mindestens eine motorisierte bewegliche Lasche (12) beinhaltet, die eine Halteposition, in der sie mechanisch mit einer Öffnung (230) einer Schürze (23) des Behälters (20) interferiert, und eine Freigabeposition aufweist, in der sie nicht mit der Schürze (23) des Behälters interferiert, wobei sich die mindestens eine motorisierte bewegliche Lasche (12) bei Aktivierung durch die Steuereinheit in ihre Halteposition bewegt, wenn der Behälter (20) auf eine vorbestimmte Weise auf der Halterung (11) platziert wird und der Deckel (30) den Behälter (20) auf eine vorbestimmte Weise verschließt;
und dass die mindestens eine bewegliche Lasche (12) in ihrer Halteposition mechanisch das Öffnen des Deckels (30) des Behälters (20) verhindert, indem sie mit mindestens einem der verschiebbaren Elemente interferiert.

2. Küchengerät gemäß Anspruch 1, **dadurch gekennzeichnet, dass** die Umfangsschürze (23) des entfernbaren Behälters (20) eine kreisförmige Form aufweist und in einen Zentrierungsvorsprung (14) der Halterung (11) eingreift; und dadurch, dass die Behälterverriegelungseinheit zwei motorisierte bewegliche Laschen (12) umfasst, die diametral gegenüberliegend in Bezug auf die kreisförmige Schürze (23) angeordnet sind, die zwei entsprechende diametral gegenüberliegende Öffnungen (230) umfasst, wobei jede bewegliche Lasche (12) mechanisch mit der entsprechenden Öffnung (230) in ihrer Halteposition interferiert.

3. Küchengerät gemäß Anspruch 1 oder 2, **dadurch gekennzeichnet, dass** der Behälter (20) das eine oder die mehreren verschiebbaren Elemente aufnimmt; wobei mindestens eines des einen oder der mehreren verschiebbaren Elemente mindestens einen magnetischen Abschnitt (241) aufweist;
und dass das Gehäuse ferner mindestens einen Hall-Effekt-Sensor umfasst, der dazu angeordnet ist, den mindestens einen magnetischen Abschnitt (241) zu erkennen, wenn der Deckel (30) den Behälter (20) auf eine vorbestimmte Weise verschließt.

4. Küchengerät gemäß Anspruch 3, **dadurch gekennzeichnet, dass** der Behälter (20) einen Griff (21) umfasst, der an einer Außenwand davon befestigt ist, wobei der Griff (21) mindestens einen Teil des einen oder der mehreren verschiebbaren Elemente aufnimmt;
wobei das eine oder die mehreren verschiebbaren Elemente mindestens einen Stab (24) in einer Führungskonfiguration, der mindestens einen magnetischen Abschnitt (241) aufweist, umfassen, wobei der Stab (24) derart installiert ist, dass er durch den Abschnitt oder Ansatz (31) des Deckels (30) nach unten gegen die Kraft einer Feder (240) in eine Position bewegt wird, in der der mindestens eine magnetische Abschnitt (241) des Stabs (24) ausreichend nahe an dem Hall-Effekt-Sensor ist, um erkannt zu werden, wobei der Ansatz (31) in Form einer Drucklasche (310) vorliegt.

5. Küchengerät gemäß Anspruch 4, **dadurch gekennzeichnet, dass** das eine oder die mehreren verschiebbaren Elemente ferner Folgendes umfassen:
einen Auslöser (22), der durch eine Apertur, die im Griff (21) des Behälters (20) gebildet wird, vorsteht, wobei der Auslöser (22) einen Riegel (221) aufweist, der angepasst ist, um mit einer Apertur (311) der Drucklasche (310) des Deckels zu interferieren, wobei der Auslöser (22) zwischen einer Halteposition, in welcher der Riegel (221) mit der Apertur (311) der Drucklasche (310) interferiert, um den Deckel (30) in einer geschlossenen Position zu halten, und einer Freigabeposition bewegbar ist, in der der Riegel (221) von der Drucklasche (310) getrennt ist; wobei der Auslöser (22) angepasst ist, um gedrückt zu werden, um das bewegliche Element (12) aus der Halteposition in die Freigabeposition zu bewegen; und
mindestens eine Feder (220), um den Auslöser in Richtung seiner Halteposition zu drücken.

6. Küchengerät gemäß Anspruch 4 oder 5, **dadurch gekennzeichnet, dass** das eine oder die mehreren verschiebbaren Elemente ferner ein Verriegelungselement (25) umfassen, das entlang des mindestens einen Stabs (24) gleitbar angeordnet ist, wobei das Verriegelungselement (25) zwischen einer verriegelten Position, in der es mit dem Auslöser (22) interferiert, wobei eine Bewegung des Auslösers (22) in seine Freigabeposition verhindert wird, und einer entriegelten Position bewegbar ist, in der es eine Bewegung des Auslösers (22) in seine Freigabeposition zulässt;
und dass die mindestens eine motorisierte bewegliche Lasche (12) in ihrer Halteposition als Anschlag wirkt, der verhindert, dass sich das Verriegelungselement (25) in seine entriegelte Position bewegt.

7. Küchengerät gemäß einem der vorhergehenden Ansprüche, **dadurch gekennzeichnet, dass** die mindestens eine motorisierte bewegliche Lasche (12) durch einen entsprechenden Motor angetrieben wird und sich schwenkbar von der Freigabeposition in die Halteposition und umgekehrt bewegt.

8. Küchengerät gemäß einem der vorhergehenden Ansprüche, **dadurch gekennzeichnet, dass** der Behälter (20) mindestens einen ferromagnetischen Abschnitt umfasst;
und dass die Erwärmungseinheit eine auf dem Gehäuse (10) montierte Induktionserwärmungsvorrichtung umfasst, wobei die Induktionserwärmungsvorrichtung von der Halterung (11) getrennt ist und in einem vorbestimmten Abstand von dem ferromagnetischen Abschnitt des Behälters (20) angeordnet ist.

9. Küchengerät gemäß einem der vorhergehenden Ansprüche, **dadurch gekennzeichnet, dass** es ferner eine Wiegeeinheit zum Wiegen des Behälters (20) und seines Inhalts umfasst.

10. Küchengerät gemäß einem der vorhergehenden Ansprüche, **dadurch gekennzeichnet, dass** die Steuereinheit mindestens einen Mikroprozessor umfasst, der angepasst ist, um unterschiedliche Kochprogramme und/oder digitale Rezeptprogramme auszuführen, die in einem internen oder entfernbaren Speicher gespeichert sind.

11. Küchengerät gemäß Anspruch 10, **dadurch gekennzeichnet, dass** die Steuereinheit betriebsmäßig mit einem berührungsempfindlichen Display (40) verbunden ist.

12. Verfahren zum Betreiben eines Küchengeräts gemäß einem der Ansprüche 1 bis 11, umfassend die Schritte:
- Platzieren eines Behälters (20) auf eine vorbestimmte Weise in einer Halterung (11), die angepasst ist, um den Behälter (20) zu stützen, wobei sich die Halterung (11) in einem Gehäuse (10) des Küchengeräts (1) befindet;
- Schließen eines Deckels (30) des Behälters (20) auf eine vorbestimmte Weise;
- Erfassen der Platzierung des Behälters (20) auf eine vorbestimmte Weise auf der Halterung (11) des Gehäuses (10) mit einem Sensor, der betriebsmäßig mit einer Steuereinheit verbunden ist;
- Antreiben mindestens einer motorisierten beweglichen Lasche (12) von einer Freigabeposition zu einer Halteposition, wobei sie mechanisch mit einer Öffnung (230) einer Schürze (23) des Behälters (23) interferiert und diese fixiert und ferner mit mindestens einem verschiebbaren Element interferiert, das mit einem Abschnitt eines Ansatzes (31) des Deckels (30) zusammenwirkt, um den Betrieb einer Antriebseinheit und/oder Erwärmungseinheit zu verhindern, falls der Deckel (30) nicht so angebracht ist, dass er den Behälter (20) auf eine vorbestimmte Weise verschließt; und
- Betreiben der Antriebs- und/oder Erwärmungseinheit.

13. Verfahren gemäß Anspruch 12, **dadurch gekennzeichnet, dass** es ferner die folgenden Schritte umfasst:
- Anhalten der Antriebs- und/oder Erwärmungseinheit;
- Antreiben der mindestens einen motorisierten beweglichen Lasche (12) von der Halteposition in die Freigabeposition;
- Öffnen des Deckels (30) des Behälters (20), um Zugriff auf das Innere zu ermöglichen; und
- gegebenenfalls Entfernen des Behälters (20) von der Halterung (11).

14. Verfahren gemäß Anspruch 13, wobei der Schritt des Öffnens des Deckels (30) des Behälters (20) das Drücken eines Auslösers (22) umfasst, der durch eine Apertur hervorsteht, die in dem Griff (21) des Behälters (20) gebildet ist.

15. Verfahren gemäß Anspruch 13 oder 14, wobei der Schritt des Antreibens der mindestens einen motorisierten beweglichen Lasche (12) von der Halteposition in die Freigabeposition durchgeführt wird, nachdem eine bestimmte Zeit nach dem Anhalten der Antriebs- und/oder Erwärmungseinheit verstrichen ist.

## Revendications

1. Appareil de cuisine pour le traitement d'aliments comprenant :
un récipient (20) pour contenir les aliments à traiter ;
un logement (10) ayant un support (11) adapté pour soutenir le récipient (20) ;
une unité d'entraînement motorisée adaptée pour faire tourner des moyens de mélange ou de coupe amovibles à l'intérieur dudit récipient (20) ;
une unité de chauffage adaptée pour chauffer les aliments à traiter à l'intérieur du récipient (20) ;
un couvercle (30) pour fermer le récipient (20) ;
un ou plusieurs éléments déplaçables qui coopèrent avec une portion ou un appendice (31) dudit couvercle (30) pour empêcher le fonctionnement de l'unité d'entraînement et/ou de l'unité de chauffage en relâchant un élément qui les déclenche, si le couvercle (30) n'est pas ajusté pour fermer le récipient (20) d'une manière prédéterminée ;
au moins un capteur pour détecter le placement du récipient sur le support (11) du logement (10) d'une manière prédéterminée, ledit capteur étant opérativement connecté à une unité de contrôle qui empêche le fonctionnement de l'unité d'entraînement et/ou de l'unité de chauffage si le récipient (20) n'est pas placé sur le support (11) du logement (10) d'une manière prédéterminée ;
**caractérisé en ce qu'**il comprend en outre une unité de verrouillage de récipient comportant au moins une languette mobile motorisée (12) ayant une position de retenue, dans laquelle il interfère mécaniquement avec une ouverture (230) d'une jupe (23) du récipient (20), et une position de libération, dans laquelle il n'interfère pas avec ladite jupe (23) du récipient, dans lequel l'au moins une languette mobile motorisée (12) se déplace vers sa position de retenue lors de l'activation par ladite unité de contrôle lorsque le récipient (20) est placé sur le support (11) d'une manière prédéterminée et le couvercle (30) ferme le récipient (20) d'une manière prédéterminée ;
et **en ce que** ladite au moins une languette mobile (12) dans sa position de retenue empêche mécaniquement l'ouverture du couvercle (30) du récipient (20) en interférant avec au moins l'un desdits éléments déplaçables.

2. Appareil de cuisine, selon la revendication 1, **caractérisé en ce que** la jupe périphérique (23) du récipient amovible (20) présente une forme circulaire et vient en prise avec une saillie de centrage (14) du support (11) ; et **en ce que** l'unité de verrouillage de récipient comprend deux languettes mobiles motorisées (12) disposées diamétralement opposées par rapport à la jupe circulaire (23) qui comprend deux ouvertures diamétralement opposées correspondantes (230), chaque languette mobile (12) interférant mécaniquement avec l'ouverture correspondante (230) dans sa position de retenue.

3. Appareil de cuisine, selon la revendication 1 ou 2, **caractérisé en ce que** le récipient (20) loge lesdits un ou plusieurs éléments déplaçables ; au moins l'un desdits un ou plusieurs éléments déplaçables ayant au moins une portion magnétique (241) ;
et **en ce que** le logement comprend en outre au moins un capteur à effet de Hall disposé pour détecter ladite au moins une portion magnétique (241) lorsque le couvercle (30) ferme le récipient (20) d'une manière prédéterminée.

4. Appareil de cuisine, selon la revendication 3, **caractérisé en ce que** le récipient (20) comprend une poignée (21) attachée à une paroi extérieure de celui-ci, ladite poignée (21) logeant au moins une partie desdits un ou plusieurs éléments déplaçables ;
lesdits un ou plusieurs éléments déplaçables comprenant au moins une tige (24) dans une configuration de guidage et ayant au moins une portion magnétique (241), ladite tige (24) étant installée de telle sorte qu'elle est déplacée vers le bas contre la force d'un ressort (240) par ladite portion ou appendice (31) du couvercle (30) vers une position dans laquelle l'au moins une portion magnétique (241) de la tige (24) est suffisamment proche dudit capteur à effet de Hall pour être détectée, ledit appendice (31) étant sous forme d'une languette de poussée (310).

5. Appareil de cuisine, selon la revendication 4, **caractérisé en ce que** lesdits un ou plusieurs éléments déplaçables comprennent en outre :
une gâchette (22) qui fait saillie à travers une ouverture formée dans la poignée (21) du récipient (20), ladite gâchette (22) ayant un verrou (221) adapté pour interférer avec une ouverture (311) de la languette de poussée (310) du couvercle, ladite gâchette (22) étant mobile entre une position de retenue, dans laquelle ledit verrou (221) interfère avec l'ouverture (311) de la languette de poussée (310) pour retenir le couvercle (30) dans une position fermée, et une position libérée, dans laquelle le verrou (221) est séparé de la languette de poussée (310) ; ladite gâchette (22) étant adaptée pour être poussée pour déplacer l'élément mobile (12) de la position de retenue vers la position libérée ; et
au moins un ressort (220) pour pousser ladite gâchette vers sa position de retenue.

6. Appareil de cuisine, selon la revendication 4 ou 5, **caractérisé en ce que** lesdits un ou plusieurs éléments déplaçables comprennent en outre un élément de blocage (25) disposé de manière coulissante le long de l'au moins une tige (24), ledit élément de blocage (25) étant mobile entre une position bloquée dans laquelle il interfère avec la gâchette (22) empêchant ladite gâchette (22) de se déplacer vers sa position libérée, et une position débloquée dans laquelle il permet à la gâchette (22) de se déplacer vers sa position libérée ;
et **en ce que** l'au moins une languette mobile motorisée (12) dans sa position de retenue agit comme une butée empêchant l'élément de blocage (25) de se déplacer vers sa position débloquée.

7. Appareil de cuisine, selon l'une quelconque des revendications précédentes, **caractérisé en ce que** l'au moins une languette mobile motorisée (12) est entraînée par un moteur correspondant et se déplace de manière pivotante de la position de libération vers la position de retenue, et vice versa.

8. Appareil de cuisine, selon l'une quelconque des revendications précédentes, **caractérisé en ce que** le récipient (20) comprend au moins une portion ferromagnétique ;
et **en ce que** ladite unité de chauffage comprend un dispositif de chauffage par induction monté sur ledit logement (10), ledit dispositif de chauffage par induction étant séparé du support (11) et disposé à une distance prédéterminée de ladite portion ferromagnétique du récipient (20).

9. Appareil de cuisine, selon l'une quelconque des revendications précédentes, **caractérisé en ce qu'**il comprend en outre une unité de pesage pour peser le récipient (20) et son contenu.

10. Appareil de cuisine, selon l'une quelconque des revendications précédentes, **caractérisé en ce que** l'unité de contrôle comprend au moins un microprocesseur adapté pour exécuter différents programmes de cuisson et/ou programmes de recettes numériques stockés dans une mémoire interne ou amovible.

11. Appareil de cuisine, selon la revendication 10, **caractérisé en ce que** l'unité de contrôle est opérativement connectée à un élément d'affichage tactile (40).

12. Procédé de fonctionnement d'un appareil de cuisine selon l'une quelconque des revendications 1 à 11 comprenant les étapes consistant à :
- placer d'une manière prédéterminée un récipient (20) dans un support (11) adapté pour soutenir ledit récipient (20), ledit support (11) étant situé dans un logement (10) de l'appareil de cuisine (1) ;
- fermer un couvercle (30) du récipient (20) d'une manière prédéterminée ;
- détecter le placement du récipient (20) d'une manière prédéterminée sur le support (11) du logement (10) avec un capteur opérativement connecté à une unité de contrôle ;
- entraîner au moins une languette mobile motorisée (12) d'une position de libération vers une position de retenue, dans laquelle elle interfère mécaniquement avec une ouverture (230) d'une jupe (23) du récipient (23) en l'immobilisant et interfère en outre avec au moins un élément déplaçable qui coopère avec une portion d'un appendice (31) du couvercle (30) pour empêcher le fonctionnement d'une unité d'entraînement et/ou d'une unité de chauffage si le couvercle (30) n'est pas ajusté pour fermer le récipient (20) d'une manière prédéterminée ; et
- faire fonctionner l'unité d'entraînement et/ou de chauffage.

13. Procédé, selon la revendication 12, **caractérisé en ce qu'**il comprend en outre les étapes consistant à :
- arrêter l'unité d'entraînement et/ou de chauffage ;
- entraîner l'au moins une languette mobile motorisée (12) de la position de retenue vers la position de libération ;
- ouvrir le couvercle (30) du récipient (20) permettant l'accès à l'intérieur ; et
- optionnellement retirer le récipient (20) à partir du support (11).

14. Procédé, selon la revendication 13, dans lequel l'étape d'ouvrir le couvercle (30) du récipient (20) comprend pousser une gâchette (22) qui fait saillie à travers une ouverture formée dans la poignée (21) du récipient (20).

15. Procédé, selon la revendication 13 ou 14, dans lequel l'étape d'entraîner l'au moins une languette mobile motorisée (12) de la position de retenue vers la position de libération est mise en œuvre après qu'une certaine quantité de temps s'est écoulée après l'arrêt de l'unité d'entraînement et/ou de chauffage.
